# EUROPÄISCHE PATENTSCHRIFT

(11) **EP 2 263 981 B1**
(45) Veröffentlichungstag und Bekanntmachung des Hinweises auf die Patenterteilung: **01.10.2014**
(21) Anmeldenummer: 10182969.5
(22) Anmeldetag: 23.08.2005
(51) Int. Cl.: C03C 17/02, C03C 17/25, C03B 19/02, C03B 19/06, C03B 20/00

(54) **Verfahren zur Herstellung eines Quarzglasbauteils**
Method for producing a component of consisting of quartz glass
Procédé de fabrication d'un composant en verre à quartz

(30) Priorität: 23.08.2004 DE 102004040833; 28.10.2004 DE 102004052312
(43) Veröffentlichungstag der Anmeldung: 22.12.2010
(62) Teilanmeldung aus: 05781997.1
(73) Patentinhaber: Heraeus Quarzglas GmbH & Co. KG, 63450 Hanau (DE)
(72) Erfinder: Kirst, Ulrich, D-55116, Mainz (DE); Stang, Wolfgang, D-63699, Kefenrod (DE); Weber, Juergen, D-63801, Kleinostheim (DE); Werdecker, Waltraud, D-63456, Hanau am Main (DE); Trommer, Martin, D-06749, Bitterfeld-Wolfen (DE); Becker, Joerg, D-61194, Niddatal (DE)
(74) Vertreter: Staudt, Armin Walter

(56) Entgegenhaltungen:
- DE-A1- 4 440 104
- DE-B3-102004 038 602
- JP-A- 2000 086 251

## Beschreibung

Die Erfindung betrifft ein Verfahren für die Herstellung eines Quarzglas-Bauteils, gemäß Anspruch 1.

Quarzglas zeichnet sich durch einen niedrigen Ausdehnungskoeffizienten, durch optische Transparenz über einen weiten Wellenlängenbereich und durch hohe chemische und thermische Beständigkeit aus. Bauteile aus Quarzglas werden für eine Vielzahl von Anwendungen eingesetzt, wie beispielsweise in der Lampenfertigung als Hüllrohre, Kolben, Abdeckplatten oder Reflektorträger für Lampen und Strahler im ultravioletten, infraroten und sichtbaren Spektralbereich, oder in der Halbleiterfertigung in Form von Reaktoren und Apparaturen aus Quarzglas für die Behandlung von Halbleiterbauteilen, Trägerhorden, Glocken, Tiegeln, Schutzschilden oder einfachen Quarzglas-Bauteilen, wie Rohre, Stäbe, Platten, Flansche, Ringe oder Blöcke. Zum Erzeugen besonderer Eigenschaften wird Quarzglas mit anderen Substanzen dotiert.

Insbesondere bei Anwendungen in der Halbleiterfertigung werden die Quarzglas-Bauteile hohen thermischen Belastungen und chemisch aggressiven Umgebungen ausgesetzt. Bei diesen Anwendungen spielen eine guten Wärmeisolierung, eine hohe Temperaturstabilität oder Temperaturwechselbeständigkeit sowie eine hohe chemische Beständigkeit und Kontaminationsfreiheit eine wichtige Rolle. Zunehmend höhere Anforderungen werden an die Standzeit derartiger Quarzglas-Bauteile gestellt.

In Bezug auf die Standzeit von Quarzglas-Bauteilen sind die Ätzresistenz und die Blasenfreiheit oberflächennaher Bereiche zu beachten. Beispielsweise führen zunächst geschlossene Blasen in Quarzglas-Reaktoren von Halbleiter-Ätzanlagen, die im Verlaufe des Einsatzes durch Materialabtrag geöffnet werden, häufig zu Verunreinigungen der im Reaktor zu behandelnden Halbleiter und beenden damit die Lebensdauer des Quarzglasreaktors. Auch mit Quarzglas reagierende, fluorhaltige Prozessgase, wie etwa CHF₃ oder CF₄, können durch Ätzabtrag die Lebensdauer eines Quarzglas-Bauteils verkürzen.

Außerdem tritt bei Halbleiterfertigungsprozessen, wie etwa bei Sputter- oder Aufdampfprozessen, häufig das Problem auf, dass sich Materialschichten auf allen Oberflächen innerhalb des Reaktors, und insbesondere auch auf den Quarzglasoberflächen, niederschlagen. Die Materialschichten können sich mit der ablösen und führen dann zu Partikelproblemen. Um dies zu vermeiden, werden die entsprechenden Quarzglasoberflächen von Zeit zu Zeit gereinigt, was üblicherweise durch ein Ätzen mit einem fluorhaltigen Medium, insbesondere mittels Flusssäure, erfolgt. Der Reinigungsprozess ist nicht nur zeit- und kostenaufwändig, sondern führt auch zu einem Abtrag von Quarzglas und einer allmählichen Verringerung der Wandstärke der Quarzglas-Bauteile. Auch dadurch wird die Lebensdauer der betreffenden Bauteile begrenzt. Es ist bekannt, dass derartige Materialschichten an rauhen Oberflächen besser haften, und dadurch die Frequenz der erforderlichen Reinigungszyklen verringert und damit die Lebensdauer der - meist sehr teueren - Quarzglas-Bauteile verlängert werden kann. Die erforderliche Oberflächenrauigkeit wird durch mechanische Abtragverfahren erzeugt, wie etwa durch Schleifen oder Sandstrahlen, oder mittels spezieller Ätzlösungen. Beide Verfahren haben Nachteile. So werden bei der mechanischen Bearbeitung der Oberfläche Risse erzeugt, die wiederum zu Partikelproblemen führen.

### Stand der Technik

Zur Vermeidung von Kontaminationen bietet es sich besonders in der Halbleiterfertigung an, Quarzglas-Bauteile aus synthetischem Quarzglas einzusetzen, die jedoch teuer sind. Eine demgegenüber kostengünstigere Alternative ist in der DE 698 06 628 T2 beschrieben, aus der auch ein Quarzglas-Bauteil für die Halbleiterfertigung und ein Verfahren gemäß der eingangs genannten Gattung bekannt sind. Darin wird vorgeschlagen, auf einem in einem separaten Verfahrensschritt vorab erzeugten Quarzglas-Bauteil aus natürlichem Rohstoff eine Schicht aus synthetischem Quarzglas zu erzeugen. Hierzu werden durch Flammenhydrolyse einer siliciumhaltigen Ausgangsverbindung in einem Abscheidebrenner SiO₂-Partikel erzeugt und diese auf der Oberfläche des Bauteils abgeschieden und dort unter Bildung einer transparenten, blasenfreien, dichten und glatten Oberflächenschicht aus synthetischem Quarzglas sofort verglast.

Die Ausbildung der Oberflächenschicht erfolgt durch eine relative Bewegung des Abscheidebrenners und der zu beschichtenden Bauteil-Oberfläche zueinander, wobei das Schichtwachstum von der aktuellen Abscheiderate und der Anzahl der Schichtlagen abhängt.

Die Herstellung von Oberflächenschichten durch ein derartiges Abscheideverfahren - insbesondere die reproduzierbare Herstellung gleichmäßiger Schichtdicken - ist langwierig und erfordert einen hohen apparativen und zeitlichen Aufwand.

Ein weiteres Verfahren zum Erzeugen einer glatten, transparenten Oberflächenschicht auf einem porösen, mittels Schlickergießverfahren hergestelltem Grünkörper wird in der DE 44 40 104 C2 beschrieben. Dabei wird eine wässrige Suspension von SiO₂-Teilchen mit einer chemischen Reinheit von 99,9 % SiO₂ erzeugt und in eine Gipsform gegossen. Die Oberfläche des resultierenden, porösen Grünkörpers wird anschließend mittels einer Knallgasflamme lokal auf hohe Temperaturen im Bereich von 1650 °C bis 2200 °C erhitzt, so dass sich das opake, poröse Grundmaterial in einem oberflächennahen Bereich mit einer Stärke von ca. 0,5 mm in transparentes Quarzglas umwandelt (= Verglasung).

Es hat sich jedoch gezeigt, dass mittels des bekannten Verfahrens verglaste Schichtdicken von mehr als 2 mm nicht zu erreichen sind. Offensichtlich wirkt die verglaste, transparente Oberflächenschicht als Wärmeisolator, der ein ausreichendes Erhitzen der darunter liegenden Schichten erschwert. Dieses Problem ist durch höhere Flammentemperaturen nicht zu lösen, da diese zu einer plastischen Verformung des Bauteils und zum Abdampfen von gasförmigem Siliciummonoxid (SiO) führen.

### Technische Aufgabenstellung

Der Erfindung liegt die Aufgabe zugrunde, ein Verfahren für die Herstellung eines Quarzglas-Bauteils anzugeben, das eine transparente SiO₂-Schicht mit besonders großer Dicke aufweist, die im Extremfall die gesamte Wandstärke des Quarzglas-Bauteils umfasst.

### Allgemeine Beschreibung der Erfindung

Diese Aufgabe wird ausgehend von dem eingangs genannten Verfahren gemäß Anspruch 1 erfindungsgemäß dadurch gelöst, dass die SiO₂-Teilchen amorph sind, durch Nassmahlen von SiO₂-Ausgangskörnung in der Flüssigkeit hergestellt werden, und beim Formgießen Teilchengrößen im Bereich bis maximal 500 µm aufweisen, wobei SiO₂-Teilchen mit Teilchengrößen im Bereich zwischen 1 µm und 50 µm den größten Volumenanteil ausmachen, und dass der Grünkörper durch Erhitzen in einer Wasserstoff enthaltenden Atmosphäre verdichtet und dabei vollständig verglast wird.

Diese Ausführungsform des erfindungsgemäßen Verfahrens kommt dann zum Einsatz, wenn eine transparente "SiO₂-Glasmasse" mit besonders großer Dicke angestrebt wird, die im Extremfall die gesamte Wandstärke des Quarzglas-Bauteils umfasst. Im letzt genannten Fall besteht dieses also aus einem porenfreien oder besonders porenarmen Körper, der durch Verglasen eines im Schlickergießverfahren erhaltenen Grünkörpers besteht. Mittels der bekannten Verfahren - sofern ein vollständiges Aufschmelzen des Grünkörpers vermieden werden soll - wird aus derartigen Grünkörpern selbst bei hohen Verglasungstemperaturen in der Regel nur ein opakes, porenhaltiges Sinterprodukt erhalten. Auch durch Anlegen einer sehr hohen Temperatur wird lediglich eine dünne transparente Oberflächenschicht auf einem opaken Grünkörper erreicht, wie dies oben beschrieben ist.

Es hat sich gezeigt, dass für die Ausbildung deutlich dickerer verglaster, transparenter Schichten sowohl an das Ausgangsmaterial des Schlickers, als auch an die Verglasungsbedingungen besondere Anforderungen zu stellen sind, die im Folgenden erläutert werden.
1. Zum einen kommt zur Bildung des Grünkörpers erfindungsgemäß ein Schlicker zum Einsatz, in dem amorphe SiO₂-Teilchen vorliegen, die durch Nassmahlen von SiO₂-Ausgangskörnung in der Flüssigkeit des Schlickers erzeugt wurden, und die eine Teilchengrößenverteilung aufweisen, bei der die Teilchengrößen im Bereich bis maximal 500 µm liegen, wobei SiO₂-Teilchen mit Teilchengrößen im Bereich zwischen 1 µm und 50 µm den größten Volumenanteil ausmachen.
   SiO₂-Teilchen in diesem Größenbereich zeigen ein vorteilhaftes Sinterverhalten. Es hat sich gezeigt, dass bei einem derartigen Schlicker ein Trocknen und Verglasen ohne Rissbildung besonders einfach möglich ist, was auf eine geringe Trockenschwindung und auf Wechselwirkungen der SiO₂-Teilchen untereinander zurückzuführen ist, die in der flüssigen Phase bis zur Ausbildung molekularer SiO₂-Bindungen führen können, und die im Grünkörper "eingefroren" werden und das Trocknen und Sintern erleichtern.
   Die SiO₂-Teilchen bestehen aus synthetisch hergestelltem SiO₂ oder aus gereinigtem natürlich vorkommendem Rohstoff, wie er in der DE 44 40 104 C2 beschrieben ist.
2. Beim erfindungsgemäßen Verfahren erfolgt das Verglasen unter reduzierenden Bedingungen durch Erhitzen des Grünkörpers in einer Wasserstoff enthaltenden Atmosphäre. Dabei wird der Grünkörper thermisch verfestigt und wenigstens die Oberfläche in Form einer SiO₂-Glasmasse vollständig verglast. Wegen seiner hohen Diffusionsrate in Quarzglas sorgt der Wasserstoff beim Sintern für einen raschen Temperaturausgleich zwischen der an der Oberfläche anliegenden höheren Temperatur und der niedrigeren Temperatur im Inneren des Grünkörpers. Der daraus resultierende besonders geringe Temperaturgradient erleichtert trotz vergleichsweise niedriger Maximaltemperatur im Bereich der Oberfläche (die ein vollständiges Dichtsintern noch nicht bewirkt), ein Fortschreiten der Schmelzfront von Außen nach Innen.

Es hat sich gezeigt, dass mittels dieses Verfahrens ein vollständiges, porenfreies Verglasen von Schichten mit Schichtstärken bis zu 10 mm möglich ist. Falls beim Sintern eine Kristallisation vermieden werden soll, sollte der Cristobalitanteil des Ausgangsmaterials höchstens 1 Gew.-% betragen (bezogen auf die Trockenmasse des Grünkörpers).

Vorzugsweise weisen die amorphen SiO₂-Teilchen beim Formgießen Teilchengrößen im Bereich bis maximal 50 µm auf. Kleinere Teilchen zeichnen sich durch eine höhere Sinteraktivität aus und erleichtern das vollständige Verglasen der Schicht.

Im Idealfall erfolgt das Sintern unter reiner Wasserstoffatmosphäre. Insbesondere auch aus Sicherheitsgründen (Explosionsgefahr) liegt der Wasserstoffgehalt beim Sintern bei mindestens 70 Vol.-%.

Außer Wasserstoff kann die Atmosphären beim Verglasen beispielsweise auch Stickstoff und vorzugsweise Helium enthalten; ein Wasserstoffgehalt von mindestens 70% ist ausreichend.

Die Verglasungstemperatur liegt bei maximal 1700 °C, vorzugsweise bei maximal 1400 °C und führt nicht zu einem "Dichtsintern" oberflächennaher Bereiche und damit zu frühzeitiger Ausbildung einer als "Wärmeisolationsschicht" wirkenden, verglasten Schicht. Die niedrige Sintertemperatur wird sowohl durch das oben beschriebene Ausgangsmaterial, als auch durch den geringen Temperaturgradienten infolge der Wasserstoff enthaltenden Sinteratmosphäre erreicht.

### Ausführungsbeispiel

Nachfolgend wird die Erfindung anhand von Ausführungsbeispielen und einer Zeichnung näher erläutert. In der Zeichnung zeigen im Einzelnen
- **Figur 1**: ein Fließdiagramm zur Erläuterung einer Verfahrensweise zur Herstel- lung eines mit einer SiO₂-Glasmasse versehenen Quarzglas-Bauteils zum Einsatz in der Halbleiterfertigung anhand des erfindungsgemäßen Verfahrens, und
- **Figur 2**: ein Heizprofil zum Verglasen einer Schlicker-Schicht auf einem Quarz- glas-Basiskörper und zum Sintern eines Grünkörpers gemäß der Erfin- dung.

### 1. Herstellen einer Schlicker-Schicht auf einem Quarzglas-Basiskörper

### Beispiel 1

Es wird ein homogener Grundschlicker hergestellt. Für einen Ansatz von 10 kg Grundschlicker (SiO₂-Wasser-Schlicker) werden in einer mit Quarzglas ausgekleideten Trommelmühle mit ca. 20 Liter Volumeninhalt, 8,2 kg einer amorphen Quarzglaskörnung aus natürlichem Rohstoff mit Korngrößen im Bereich zwischen 250 µm und 650 µm mit 1,8 kg deionisiertem Wasser mit einer Leitfähigkeit von weniger als 3 µS vermischt. Die Quarzglaskörnung wurde vorab in einem Heißchlorierverfahren gereinigt; es wird darauf geachtet, dass der Cristobalitgehalt unter 1 Gew.-% liegt.

Diese Mischung wird mittels Mahlkugeln aus Quarzglas auf einem Rollenbock bei 23 U/min während einer Dauer von 3 Tagen soweit vermahlen, dass sich ein homogener Grundschlicker mit einem Feststoffgehalt von 79 %. Im Verlauf des Vermahlens kommt es infolge des in Lösung gehenden SiO₂ zu einer Absenkung des pH-Werts auf etwa 4.

Dem so erhaltenen homogenen Grundschlicker wird weitere amorphe SiO₂-Körnung mit einer Korngröße um 5 µm zugemischt, bis ein Feststoffgehalt von 84 Gew.-% erreicht ist. Die Mischung wird 12 Stunden lang in einer Trommelmühle bei einer Drehzahl von 25 U/min homogenisiert. Der so erhaltene Schlicker hat einen Feststoffgehalt von 84 % und eine Dichte von 2,0 g/cm³. Die nach dem Vermahlen der Quarzglaskörnung erhaltenen SiO₂-Teilchen im Schlicker 14 zeigen eine Teilchengrößenverteilung, die durch einen D₅₀- Wert von etwa 8 µm und durch einen D₉₀-Wert von etwa 40 µm gekennzeichnet ist.

In den Schlicker wird einige Sekunden lang ein ringförmiger Quarzglas-Flansch mit einem Außendurchmesser von 300 mm für einen Single-Wafer-Halter eingetaucht, dessen Oberfläche vorab durch chemisches Ätzen (Frosten) auf eine mittlere Rautiefe Rₐ von 2 µm eingestellt worden ist.

Auf dem Quarzglas-Flansch bildet sich dadurch eine gleichmäßige, geschlossene Schlicker-Schicht mit einer Dicke von etwa 0,35 mm. Diese Schlicker-Schicht wird zunächst ca. 5 Stunden bei Raumtemperatur und anschließend mittels eines IR-Strahlers an Luft getrocknet. Die getrocknete Schlicker-Schicht ist rissfrei, und sie hat eine mittlere Dicke von etwas weniger als 0,3 mm.

Der eingesetzte Schlicker ist bei diesem flächigen Auftrag auf dem Quarzglas-Flansch vorzugsweise dilatant. Die als "Dilatanz" bezeichnete rheologische Eigenschaft des Schlickers, zeigt sich darin, dass seine Viskosität mit der Schergeschwindigkeit zunimmt. Dies führt dazu, dass nach dem Wegfall der Scherkräfte - nach dem Auftragen des Schlickers als Schlicker-Schicht auf dem Quarzglas-Bauteil - die Viskosität abnimmt, was die Ausbildung einer gleichmäßig dicken Schlickerschicht erleichtert.

### Beispiel 2

Es wird ein Grundschlicker hergestellt, wie anhand Beispiel 1 beschrieben. Anstelle einer Zugabe von weiterer amorpher SiO₂-Körnung mit einer Korngröße von 5 µm wird dem homogenen, stabilen Grundschlicker weitere amorphe SiO₂-Körnung mit einer Korngröße um 40 µm zugemischt, bis ein Feststoffgehalt von 84 Gew.-% erreicht ist. Die Mischung wird 12 Stunden lang in einer Trommelmühle bei einer Drehzahl von 25 U/min homogenisiert. Der so erhaltene Schlicker hat einen Feststoffgehalt von 84 % und eine Dichte von 2,0 g/cm³. Die nach dem Vermahlen der Quarzglaskörnung erhaltenen SiO₂-Teilchen im Schlicker 14 zeigen eine Teilchengrößenverteilung, die durch einen D₅₀- Wert von etwa 14 µm und durch einen D₉₀-Wert von etwa 40 µm gekennzeichnet ist.

Der Schlicker kann neben den amorphen SiO₂-Teilchen auch Precursorkomponenten für die Bildung von SiO₂-Partikeln enthalten. Dabei handelt es sich um hydrolysierbare Siliziumverbindungen, wie sie bei Sol-Gel-Verfahren zur Herstellung von SiO₂ eingesetzt werden. Derartige Precursorkomponenten bilden infolge ihrer Hydrolyse molekulare Bindungen in der Schlicker-Schicht, führen zu einer Verfestigung und erleichtern dadurch das Sintern. Andererseits führen sie in hoher Konzentration jedoch auch zu einer hohen Trockenschwindung und können zu einer Rissbildung beitragen, was den Anteil an derartigen Precursorkomponenten im Schlicker begrenzt.

In den Schlicker wird einige Sekunden lang ein Ende eines Quarzglasrohres, dessen Oberfläche vorab durch chemisches Ätzen (Frosten) auf eine mittlere Rautiefe Rₐ von 2 µm eingestellt worden ist, etwa 3 cm tief eingetaucht. Am Ende des Quarzglasrohres bildet sich infolge des einmaligen, kurzen Eintauchvorgangs eine geschlossene Schlicker-Schicht mit einer Dicke von etwa 0,4 mm aus. Diese Schlicker-Schicht wird ca. 10 Minuten bei Raumtemperatur getrocknet. Der Tauch- und Trocknungsvorgang wird so oft wiederholt, bis sich am Ende des Quarzglasrohres eine Schlickermasse in Form einer wulstartigen Verdickung mit einer mittleren Dicke von ca. 15 mm ausgebildet hat. Diese Verdickung wird anschließend an Luft getrocknet.

Der eingesetzte Schlicker ist bei diesem zonenweisen Auftrag auf dem Quarzglasrohr vorzugsweise strukturviskos. Die als "Strukturviskosität" bezeichnete rheologische Eigenschaft des Schlickers, zeigt sich darin, dass seine Viskosität mit der Schergeschwindigkeit abnimmt. Dies führt dazu, dass nach dem Wegfall der Scherkräfte - nach dem Auftragen des Schlickers die Viskosität zunimmt, was die Ausbildung einer wulstartigen Schlickerschicht erleichtert.

### 2. Verglasen der Schlicker-Schicht

### Beispiel 3

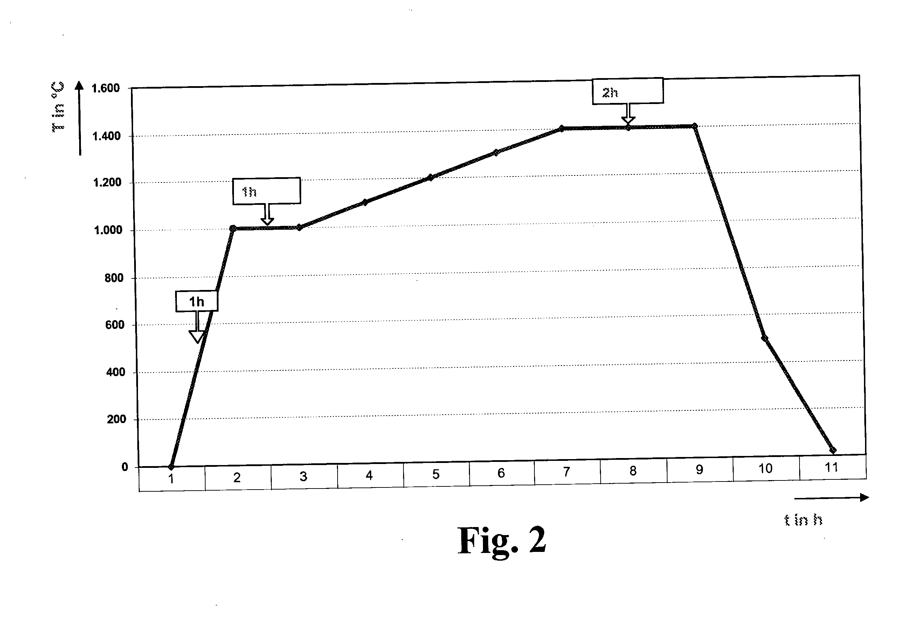

Die anhand von Beispiel 1 hergestellte und getrocknete Schlicker-Schicht auf dem Quarzglas-Flansch wird anschließend unter reiner Wasserstoffatmosphäre anhand des in Figur 2 gezeigten Heizprofils in einem Sinterofen verglast.

Das Heizprofil umfasst eine anfänglich steile Heizrampe, während der die Schlicker-Schicht von Raumtemperatur innerhalb von einer Stunde auf eine untere Heiztemperatur von 1000 °C erhitzt wird. Auf der unteren Heiztemperatur wird die Schlicker-Schicht eine Stunde lang gehalten und anschließend über eine zweite, flache Heizrampe über vier Stunden auf eine obere Heiztemperatur von 1400 °C erhitzt. Die Haltezeit bei der oberen Heiztemperatur beträgt im Ausführungsbeispiel zwei Stunden. Danach ist die Schlicker-Schicht vollständig verglast, transparent und blasenfrei.

Das anschließende Abkühlen erfolgt im Ofen unter Wasserstoff bis auf eine Temperatur von 500 °C mit einer geregelten Abkühlrate von 15°C/min und danach bei weiter geschlossenem Ofen durch freies Abkühlen.

### 3. Herstellen und Sintern eines durch Schlickergießen erhaltenen Grünkörpers

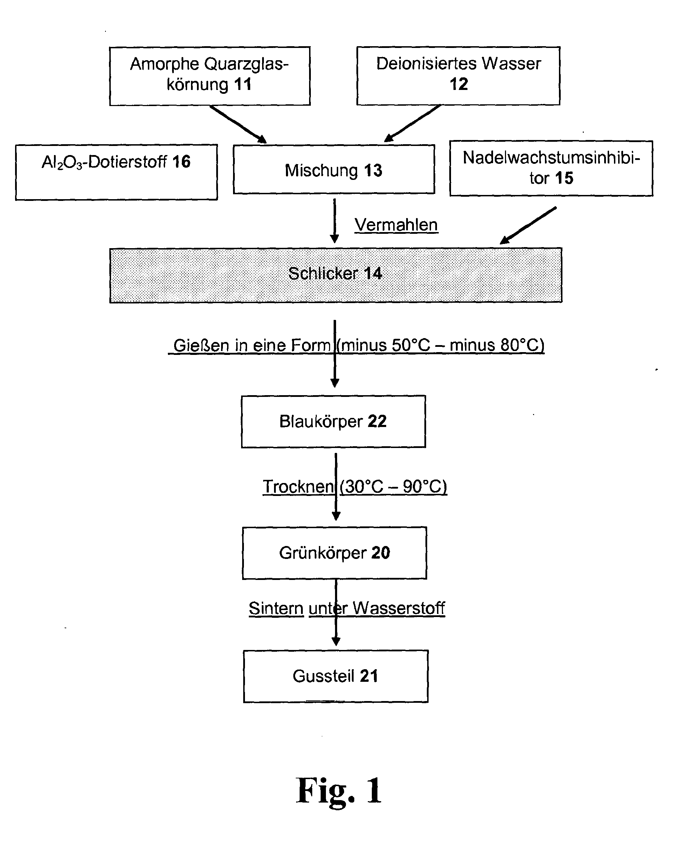

Nachfolgend wird anhand des Fließdiagramms von Figur 1 die Herstellung eine vollkommen verglasten und transparenten Quarzglaskörpers durch Sintern eines nach dem Schlickergießverfahren erhaltenen Grünkörpers näher erläutert.

Es wird eine Schlicker aus Quarzglaskörnung 11 und Wasser 12 hergestellt, wie oben anhand Beispiel 1 beschrieben. Zusätzlich wird dem Schlicker feinteiliges Al₂O₃-Pulver 16 in einer Menge von 500 Gew.-ppm (bezogen auf den SiO₂-Anteil) beigefügt. Diese Mischung 13 wird in einer Trommelmühle zu einem homogenen Schlicker 14 vermahlen, der einen Feststoffgehalt von 82 % aufweist. Die nach dem Vermahlen erhaltenen SiO₂-Teilchen im Schlicker 14 zeigen eine Teilchengrößenverteilung mit Teilchengrößen im Bereich zwischen 0,45 µm und 50 µm, wobei SiO₂-Teilchen mit Teilchengrößen im Bereich zwischen 1 µm und 10 µm den größten Volumenanteil ausmachen (D₅₀-Wert). Dieser Mischung werden außerdem 16 Gew.-% Glycerin (bezogen auf die verbleibende Flüssigphase), das als Nadelwachstumsinhibitor 15 wirkt, zugeführt und die Mischung 12 Stunden lang homogenisiert. Das Homogenisieren erfolgt in der Trommelmühle bei einer Drehzahl von 25 U/min.

Anschließend wird aus dem homogenen Schlicker 14 ein Grünkörper 20 erzeugt. Hierzu wird der Schlicker 14 in eine rohrförmige Membranform aus vakuumgeformten Silikon gegossen, die in Kohlendioxidschnee (Trockeneis) eingebettet ist. Dadurch wird ein rasches Einfrieren des Schlickers 14 zu einem Blaukörper 22 in Form eines Stabes mit einem Außendurchmesser von 10 mm bewirkt. Die Zugabe von Glycerin trägt zu einem homogenen Gefüge bei, das frei von Eisnadelstrukturen ist. Der schockgefrorene Blaukörper 22 wird der Membranform entnommen und unmittelbar - in gefrorenem Zustand - in einen auf 80 °C vorgewärmten Umlufttrockenschrank eingebracht und darin mehrere Stunden lang bei dieser Temperatur getrocknet. Durch das stetige Abdampfen und Abführen der Feuchtigkeit von der Oberfläche wird Rekondensation von Feuchtigkeit und ein nochmaliges oberflächliches Einfrieren, das mit Nadelkristallbildung und einer Störung des Grünkörpergefüges verbunden wäre, verhindert.

Der getrocknete Grünkörper 20 wird anschließend anhand des in Figur 2 dargestellten Heizprofils in einem Ofen unter reiner Wasserstoffatmosphäre gesintert, wobei die Haltezeit bei der oberen Heiztemperatur vier Stunden (anstelle von zwei Stunden) beträgt.

Auf diese Weise wird ein vollständiges Verglasen des Grünkörpers erreicht und ein stabförmiges Gussteil 21 mit einem Außendurchmesser von etwa 10 mm, bestehend aus transparentem Quarzglas erhalten.

## Patentansprüche

1. Verfahren zur Herstellung eines Quarzglas-Bauteils, indem ein Schlicker (14) aus SiO₂-Teilchen und einer Flüssigkeit erzeugt, daraus durch Formgießen und Trocknen ein poröser Grünkörper (20) gebildet und dieser durch Sintern vollständig oder teilweise verdichtet wird, wobei die SiO₂-Teilchen amorph sind, durch Nassmahlen von SiO₂-Ausgangskörnung in der Flüssigkeit hergestellt werden, und beim Formgießen Teilchengrößen im Bereich bis maximal 500 µm aufweise, wobei SiO₂-Teilchen mit Teilchengrößen im Bereich zwischen 1 µm und 50 µm den größten Volumenanteil ausmachen, **dadurch gekennzeichnet, dass** der Grünkörper (20) durch Erhitzen in einer Wasserstoff enthaltenden Atmosphäre verdichtet und dabei vollständig verglast wird.

2. Verfahren nach Anspruch 1, **dadurch gekennzeichnet, dass** die amorphen SiO₂-Teilchen beim Formgießen Teilchengrößen im Bereich bis maximal 50 µm aufweisen.

3. Verfahren nach Anspruch 1 oder 2, **dadurch gekennzeichnet, dass** der Wasserstoffgehalt beim Sintern mindestens 70 Vol.-% beträgt.

## Claims

1. A method for producing a quartz glass component by preparing a slip (14) from SiO₂ particles and a liquid, forming a porous green body (20) therefrom by mold casting and drying, and densifying said porous green body completely or in part by sintering, wherein the SiO₂ particles are amorphous, are prepared by wet-milling SiO₂ start grains in the liquid, and have particle sizes in the range of not more than 500 µm during mold casting, wherein SiO₂ particles with particle sizes in the range between 1 µm and 50 µm form the greatest volume fraction, **characterized in that** the green body (20) is densified by heating in a hydrogen-containing atmosphere and is thereby completely vitrified.

2. The method according to claim 1, **characterized in that** the amorphous SiO₂ particles during mold casting have particle sizes in the range of not more than 50 µm.

3. The method according to claim 1 or 2, **characterized in that** the hydrogen content during sintering is at least 70 vol. %.

## Revendications

1. Procédé pour la production d'un composant en verre de quartz où est produite une barbotine (14) est générée à partir de particules de SiO² et d'un liquide, et un corps de base poreux (20) étant formé par moulage et séchage, lequel est densifié complément ou partiellement par frittage, les particules SiO² étant amorphes et fabriquées en broyant par voie humide dans le liquide des grains de SiO² de départ, et présentant lors du moulage une granulométrie maximale de 500 µm, les particules SiO² comprises entre 1 µm et 50 µm représentant le plus grand volume, **caractérisé en ce que** le corps de base (20) est densifié dans une atmosphère contenant de l'hydrogène et est ainsi complètement vitrifié.

2. Procédé selon la revendication 1, **caractérisé en ce que** lors du moulage, les particules de SiO² amorphes présentent des tailles maximales de particules de 50 µm.

3. Procédé selon la revendication 1 ou 2, **caractérisé en ce que** lors du frittage, la teneur en hydrogène est d'au moins 70 pour cent en volume.
